(19) Europäisches Patentamt

European Patent Office

Office européen des brevets

(11) Publication number: **0 282 220 B1**

## EUROPEAN PATENT SPECIFICATION

(45) Date of publication of patent specification: **27.09.95**

(21) Application number: **88301790.7**

(22) Date of filing: **01.03.88**

(51) Int. Cl.⁶: **C08J 5/06**, D06M 10/00, B29C 59/12, B29C 59/14, B29B 15/08

The file contains technical information submitted after the application was filed and not included in this specification

(54) Polyolefin molded body and process for preparation thereof.

(30) Priority: **02.03.87 JP 45153/87**

(43) Date of publication of application:
**14.09.88 Bulletin 88/37**

(45) Publication of the grant of the patent:
**27.09.95 Bulletin 95/39**

(84) Designated Contracting States:
**DE FR GB IT NL**

(56) References cited:
EP-A- 0 045 580    EP-A- 0 062 491
EP-A- 0 144 997    EP-A- 0 168 923
FR-A- 2 534 262    GB-A- 2 026 379
GB-A- 2 051 667

(73) Proprietor: **MITSUI PETROCHEMICAL INDUS-TRIES, LTD.**
**2-5, Kasumigaseki 3-chome**
**Chiyoda-ku**
**Tokyo 100 (JP)**

(72) Inventor: **Tokita, Suguru**
**4-9, Waki 2-chome**
**Waki-cho**
**Kuga-gun**
**Yamaguchi-ken (JP)**
Inventor: **Inagaki, Hajime**
**2-3, Muronokicho 1-chome**
**Iwankuni-shi**
**Yamaguchi-ken (JP)**

(74) Representative: **Cresswell, Thomas Anthony et al**
**J.A. KEMP & CO.**
**14 South Square**
**Gray's Inn**
**London WC1R 5LX (GB)**

**Description**

The present invention relates to a surface-treated, highly oriented polyolefin yarn and a process for the preparation thereof. More particularly, the present invention relates to a process in which a highly oriented polyolefin yarn is subjected to a surface treatment such as a corona discharge treatment or a plasma discharge treatment without formation of convexities and concavities on the entire surface of the molded body, whereby the adhesiveness to a polar matrix material and the reinforcing effect can be improved while avoiding reduction of the mechanical strength of the yarn.

Fiber-reinforced plastics are excellent in the strength and rigidity and therefore, they are widely used for automobile parts, parts of electrical appliances, housing materials, industrial materials, small ships, sporting goods, medical appliances, engineering materials, construction materials and the like. However, since glass fibers are used as the reinforcer in almost all of these fiber-reinforced plastics, obtained composite bodies are defective in that the weight is much heavier than unreinforced plastics. Accordingly, development of a composite body having a light weight and a good mechanical strength is desired.

Filaments obtained by drawing a polyolefin such as high-density polyethylene, especially polyethylene having a super-high molecular weight, at a very high draw ratio have high tensile modulus and high strength and also have a light weight, and it is expected that these filaments will be effectively used as a fibrous reinforcing material suitable for reducing the weight of a composite body. However, as is well-known in the art, the polyolefin is poor in the adhesiveness to other polar material, and therefore in order to use the polyolefin as the reinforcing material, it is indispensable that the adhesiveness should be improved. As the means for attaining this improvement, there are proposed a method in which a polyolefin molded body is subjected to a plasma discharge treatment to improve the adhesiveness to a matrix material (see Japanese Patent Publication No. 794/78 and Japanese Patent Application Laid-Open Specification No. 177032/82), and a method in which a polyolefin molded body is subjected to a corona discharge treatment to improve the adhesiveness to a matrix material (see Japanese Patent Publication No. 5314/83 and Japanese Patent Application Laid-Open Specification No. 146078/85). As described in Japanese Patent Application Laid-Open Specification No. 177032/82 or Japanese Patent Publication No. 5314/83, according to these known methods, many fine convexities and concavities of 0.1 to 4 $\mu$ are formed on the surface of a polyolefin molded body, and by these fine convexities and concavities, the adhesiveness of the surface of the molded body is improved. Furthermore, in Japanese Patent Application Laid-Open Specification No. 146708/85, it is taught that even if a corona discharge treatment is weakly effected with a total irradiation dose of 0.05 to 3.0 watt.min/m$^2$, very fine haze should inevitably be generated by the discharge on filaments, and in Table 1 on page 3 of this laid-open specification, it is shown that by carrying out the corona discharge treatment with such a small irradiation dose as 0.2 watt.min/m$^2$ at one time, the tensile strength of filaments is reduced to 60 to 70% of untreated filaments. It is considered that this reduction of the strength is caused by fine convexities and concavities formed on the entire surface.

As is apparent from the foregoing description, it has been considered that in order to improve the adhesiveness of a polyolefin molded body, especially a highly oriented polyolefin molded body, to a polar material, it is an indispensable requirement that fine convexities and concavities should be formed on the entire surface by a corona discharge treatment and the bonding specific surface area to a polar material should be increased or the anchoring effect should be exerted. Accordingly, it has been considered that certain reduction of the strength is unavoidable for improving the adhesiveness of fine filaments such as filaments of polyethylene having a super-high molecular weight.

In case of a molded body for which a high strength is not severely required, no trouble or disadvantage is brought about even though convexities and concavities are formed on the entire surface of the molded surface. In contrast, in case of super-high-molecular-weight polyolefin filaments characterized by high tensile modulus and high tensile strength, reduction of the mechanical strength properties even for improvement of the adhesiveness should be avoided because the characteristics of the molded body are lost.

Under this background, we made research with a view to developing a process for improving the adhesiveness of an oriented polyolefin yarn without forming fine convexities and concavities on the entire surface of the yarn, and as the result, it was found that if a polyolefin yarn is prepared while controlling reduction of the molecular weight of the starting material as much as possible, even when the molded article is subjected to a surface treatment such as a corona discharge treatment, fine convexities and concavities are not formed on the entire surface of the molded body, and if oxygen is added to the surface in an amount exceeding a specific level, the adhesiveness is prominently improved and the strength is not substantially reduced. We have now completed the present invention based on this finding.

More specifically, in accordance with one aspect of the present invention, there is provided a drawn filament yarn which is highly molecularly oriented and has a smooth surface which is substantially free of convexities and concavities having a crack width of 0.1 micron or more in the orientation direction, and which has at least 4 oxygen atoms added to the surface per 100 carbon atoms, as measured according to electron spectroscopy for chemical analysis comprising high-molecular weight polyolefin having an intrinsic viscosity of at least 5 dl/g as measured in decalin as the solvent at 135°C, said drawn filament yarn being obtainable by mixing a high-molecular-weight polyolefin, a waxy material compatible with the high-molecular-weight polyolefin at a weight ratio of from 10/90 to 80/20 and from 0.01 to 5% by weight of a heat stabilizer at a temperature lower than the melting point of the high molecular-weight polyolefin, melt-kneading the mixture at a temperature higher than the melting point at the high-molecular-weight polyolefin but less than 100°C higher than the melting point of the high-molecular-weight polyolefin, extruding the melt from a die in the form of an undrawn yarn, cooling and solidifying the undrawn yarn, drawing the undrawn yarn at a draw ratio of at least 10 at a temperature close to the melting point of high-molecular-weight polyolefin and extracting the waxy material from the yarn during or after drawing, and subjecting the yarn to a corona discharge treatment or a plasma discharge treatment, while controlling the reduction ratio of the intrinsic viscosity to below 14%, and adding at least 4 oxygen atoms to the surface per 100 carbon atoms, as measured according to electron spectroscopy for chemical analysis.

In accordance with another aspect of the present invention, there is provided a process for production of such a yarn which comprises the steps of mixing a high-molecular-weight polyolefin, a waxy material compatible with the high-molecular-weight polyolefin at a weight ratio of from 10/90 to 80/20 and from 0.01 to 5% by weight of a heat stabiliser at a temperature lower than the melting point of the high molecular-weight polyolefin, melt-kneading the mixture at a temperature higher than the melting point of the high-molecular-weight polyolefin but less than 100°C higher than the melting point of the high-molecular-weight polyolefin, extruding the melt from a die in the form of an undrawn yarn, cooling and solidifying the undrawn yarn, drawing the undrawn yarn at a draw ratio of at least 10 at a temperature close to the melting point of high-molecular-weight polyolefin and extracting the waxy material from the yarn during or after drawing and subjecting the yarn to a corona discharge treatment or a plasma discharge treatment, while controlling the reduction ratio of the intrinsic viscosity to below 14%, and adding at least 4 oxygen atoms to the surface per 100 carbon atoms, as measured according to electron spectroscopy for chemical analysis.

Fig. 1 is an electron microscope photo of an untreated filament obtained in Example 1.

Fig. 2 is an electron microscope photo of a filament subjected to a corona discharge treatment obtained in Example 1.

Fig. 3 is an electron microscope photo of an untreated filament obtained in Comparative Example 1.

Fig. 4 is an electron microscope photo of a filament subjected to a corona discharge treatment, obtained in Comparative Example 1.

Each Fig. illustrates the surface state of the filament.


Detailed Description of the Preferred Embodiments


The intrinsic viscosity ($\eta$) m of the high-molecular-weight polyolefin used in the present invention, as measured in decalin as the solvent at 135°C, is at least 5 dl/g, preferably 7 to 30 dl/g and especially preferably 7 to 15 dl/g. As the high-molecular-weight polyolefin, there can be mentioned homopolymers and copolymers of ethylene, propylene, 1-butene, 1-pentene, 1-hexene, 1-octene, 1-decene and 4-methyl-1-pentene. Among these polymers, a highly crystalline homopolymer of ethylene and a highly crystalline copolymer of ethylene with a small amount of other $\alpha$-olefin are especially preferred as a reinforcing material because the tensile modulus and tensile strength can be increased to very high levels.

The highly oriented polyolefin yarn, hereafter referred to as the molded body of the present invention, is obtained by subjecting the yarn to a corona discharge treatment or a plasma discharge treatment while controlling the reduction ratio of the intrinsic viscosity ($\eta$) p. The yarn has a smooth surface and preferably has at least 6 oxygen atoms, especially preferably at least 8 oxygen atoms, added to the surface per 100 carbon atoms.

By smooth surface of the molded body, it is meant in the present invention that when the surface of the polyolefin molded body subjected to the discharge treatment is observed by an electron microscope according to the method described below, convexities and concavities having a crack width of at least 0.1 $\mu$m, preferably at least 0.08 $\mu$m, in the direction of orientation are not found. In a polyolefin molded body, the surface of which is not smooth, for example, a polyolefin molded body having fine convexities and concavities having a crack width of at least 0.1 $\mu$m, which are formed on the entire surface, mechanical strength characteristics such as tensile strength are reduced.

The method for observing the surface state of the polyolefin molded body comprises the pre-treatment and photographing steps. At the pre-treatment step, (1) a cover glass is fixed to a sample stand by a double-coated tape and a sample is fixed onto the cover glass by the double-coated tape, (2) an electroconductive paint (silver paste marketed under the tradename of "Silvest P-225") is coated between the sample stand and sample and between the cover glass and sample stand, and (3) gold is vacuum-deposited on the sample surface by a vacuum deposition apparatus (Model JEE 4B supplied by Nippon Denshi). Photographing is performed at 3000 magnifications by using an electron microscope photographing apparatus (Model JSM 25 SIII supplied by Nippon Denshi). The acceleration voltage adopted is 12.5 KV.

If the number of oxygen atoms added to the surface of the molded body is smaller than 4 per 100 carbon atoms, the adhesiveness to a polar material is not improved.

The amount of oxygen added to the surface of the molded body is measured according to the following procedures.

Namely, a sample stand having a sample fixed thereto by a double-coated tape is placed in an X-ray photoelectron spectroscopic apparatus (Model ESCA 750 supplied by Shimazu Seisakusho), and the vacuum degree is adjusted to $10^{-8}$ Torr and $C^{1s}$ and $O^{1s}$ are measured by using $A\ell$-$K\alpha$ (1486.6 eV) as the light source. After the measurement, the waveform processing is carried out, and the respective peak areas are calculated and the ratio of oxygen to carbon is determined.

According to the process of the present invention a highly oriented polyolefin molded body obtained by molding a high-molecular-weight polyolefin having an intrinsic viscosity $(\eta)$ m of at least 3 d$\ell$/g as measured in decalin as the solvent at 135°C while controlling the reduction ratio of the intrinsic viscosity $(\eta)$ p of the molded body below 14%, preferably below 10%, especially preferably below 7%, is subjected to a corona discharge treatment or a plasma discharge treatment.

If the reduction ratio of the intrinsic viscosity p of the polyolefin molded body exceeds 14%, fine convexities and concavities having a crack width larger than 0.1 $\mu$m are formed on the entire surface and hence, the mechanical strength is reduced.

The reduction ratio (%) of the intrinsic viscosity $(\eta)$ p of the polyolefin molded body, referred to in the present invention, is a value defined by the following formula:

$$\text{Reduction ratio } (\%) = \frac{(\eta) \, m - (\eta) \, p}{(\eta) \, m} \times 100$$

wherein $(\eta)$ m stands for the intrinsic viscosity (d$\ell$/g) of the starting polyolefin and $(\eta)$ p stands for the intrinsic viscosity (d$\ell$/g) of the highly oriented polyolefin molded body.

An ordinary discharge treatment apparatus such as an apparatus supplied by Tomoe Kogyo can be used for the corona discharge treatment of the polyolefin molded body, but the apparatus that can be used is not limited to the apparatus of this type. Any of a bar type electrode, a sheet type electrode and a split type electrode can be used, and use of a bar type electrode is especially preferred. It is preferred that the electrode spacing be 0.4 to 2.0 mm, especially 0.7 to 1.5 mm. The treatment energy is ordinarily 0.4 to 500 W/m²/min, preferably 10 to 500 W/m²/min, especially preferably 25 to 200 W/m²/min. If the treatment energy is smaller than 0.4 W/m²/min, it happens that the effect of improving the adhesiveness is not attained, and if the treatment energy is larger than 500 W/m²/min, convexities and concavities are sometimes formed to cause reduction of the mechanical strength.

A high-frequency discharge apparatus, a microwave discharge apparatus and a glow discharge apparatus can be used for the plasma discharge treatment of the polyolefin molded body. As the treatment gas, there can be mentioned air, nitrogen, oxygen, argon and helium. A mixture comprising two or more of these gases at an optional ratio may be used. Either an internal electrode or an external electrode can be used. The external electrode may be a capacity type electrode or an induction type electrode.

The process for preparing a highly oriented polyolefin molded body while controlling the reduction ratio of the intrinsic viscosity $(\eta)$ p of the molded body below 14% is a process in which a molded body is prepared while controlling thermal degradation of the high-molecular-weight polyolefin, which is caused by heating at the molding step and maintenance of the high-molecular-weight polyolefin at a high temperature. More specifically, a powder or pellet of the high-molecular-weight polyolefin is mixed with a hat stabilizer and a diluent such as an aliphatic hydrocarbon or derivative thereof such as a paraffin wax, an aliphatic hydrocarbon solvent or liquid paraffin at a temperature lower than the melting point of the high-molecular-weight polyolefin, the mixture is melt-kneaded at a temperature in the range of from the melting point of the high-molecular-weight polyolefin to the temperature higher by 100°C than the melting point of the high-molecular-weight polyolefin, the kneaded molten mixture is extruded in the form of an undrawn yarn from a die, the extrudate is cooled and solidified preferably after drafting the extrudate at a draft ratio of 10 to 40, and the undrawn yarn is drawn at a temperature close to the melting point at a draw ratio of at least 10, preferably 15 to 30, whereby an intended molded body is prepared. Incidentally, the diluent can be extracted from the molded body during or after drawing.

The high-molecular-weight polyolefin/diluent mixing weight ratio is in the range of from 10/90 to 80/20, preferably in the range of from 20/80 to 60/40, and the heat stabilizer is incorporated in an amount of 0.01 to 5% by weight, preferably 0.05 to 1% by weight, based on the composition. A waxy material which is solid at normal temperature, such as paraffin wax is preferred as the diluent.

When a diluent is not used for melt extrusion molding of a high-molecular-weight polyolefin, especially a super-high-molecular-weight polyolefin having an intrinsic viscosity $(\eta)$ m higher than 5 d$\ell$/g, it sometimes happens that the intrinsic viscosity $(\eta)$ m is reduced by self-exothermicity. Furthermore, if a super-high-molecular-weight polyolefin is mixed at a termpature higher than the melting point of the super-high-molecular-weight polyolefin to form a liquid mixture, it is apprehended that the molecular weight will be reduced during storage of the liquid mixture even if a heat stabilizer is used. Therefore, such procedures are not preferred.

The highly oriented polyolefin molded body of the present invention having a tensile modulus of at least 20 GPa, preferably at least 50 GPa, and a tensile strength of at least 1.2 GPa, preferably at least 1.5 GPa, is especially suitable as a reinforcing material because the weight is light, the rigidity and tensile strength are high and the weatherability is excellent.

When the highly oriented polyolefin molded body which is subjected to the discharge treatment according to the present invention is used for the production of a composite material, there can be adopted a method in which a filamentary drawn product is formed into a rope, a net, a cloth sheet, a non-woven fabric or a paper and is impregnated or laminated with a polar material as described below, a method in which a tape-shaped product is formed into a cloth sheet, a rope or the like and is impregnated or laminated with a polar material as described below, and a method in which a filament or a tape is appropriately cut and is incorporated as a fibrous reinforcer into a polar material.

As the polar material to be used for the production of a composite material by bonding or impregnation together with the highly oriented polyolefin molded body subjected to the discharge treatment, there can be mentioned inorganic polar materials, for example, cements such as Portland cement and alumina cement and ceramic materials such as $A\ell_2O_3$, $SiO_2$, $B_4C$, $TiB_2$ and $ZrB_2$, and organic polar materials, for example, thermosetting resins such as a phenolic resin, an epoxy resin, an unsaturated polyester resin, a diallyl phthalate resin, a urethane resin, a melamine resin and a urea resin and thermoplastic resins such as a nylon, a polyester, a polycarbonate, a polyacetal, a polyvinyl chloride resin, a cellulose resin, a polystyrene resin and an acrylonitrile/styrene copolymer. A polar material having a hardening temperature or molding temperature lower than the softening point of the polyolefin molded body can be bonded to the polyolefin molded body by heating at a temperature lower than the softening point of the polyolefin molded body. In case of a polar material having a hardening temperature or molding temperature higher than the softening point of the polyolefin molded body, there may be adopted a method in which the polyolefin molded body is impregnated with a solution of the polar material in an organic solvent and the organic solvent is then removed by drying.

The highly oriented polyolefin molded body of the present invention is prominently improved over the conventional molded body subjected to a corona discharge treatment or the like in the adhesiveness to a polar material. Moreover, the retention ratio of the mechanical strength such as the tensile strength in the molded body is ordinarily at least 85% and preferably at least 90%, and there is no substantial reduction of the mechanical strength. Accordingly, if the molded body of the present invention is combined with a polar material and these characteristics are utilized for the production of sporting goods such as rackets, skis, fishing rods, golf clubs and swords, leasure goods such as yachts, boats and surfing boards, protectors such as helmets and medical appliances such as artificial joints and dental plates, mechanical strength characteristics such as flexural strength and flexural modulus are highly improved.

In the conventional process, for example the process disclosed in Japanese Patent Application Laid-Open Specification No. 146078/85, the irradiation dose at one time is decreased so as to avoid reduction of the strength and in order to attain effective bonding, it is necessary to repeat the irradiation several times, that is, 5 to 10 times as shown in the examples Therefore, the operation becomes complicated. In contrast, according to the process of the procesent invention, a sufficient effect of improving the adhesiveness can be obtained by conducting irradiation only once, and moreover, even if the irradiation dose is increased, there is no risk of reduction of the mechanical strength. Therefore, the tolerance is large and the operation is very simple.

The present invention will now be described in detail with reference to the following examples that by no means limit the scope of the invention.

Example 1

(Production of Super-High-Molecular-Weight Polyethylene Multi-Filament Yarn)

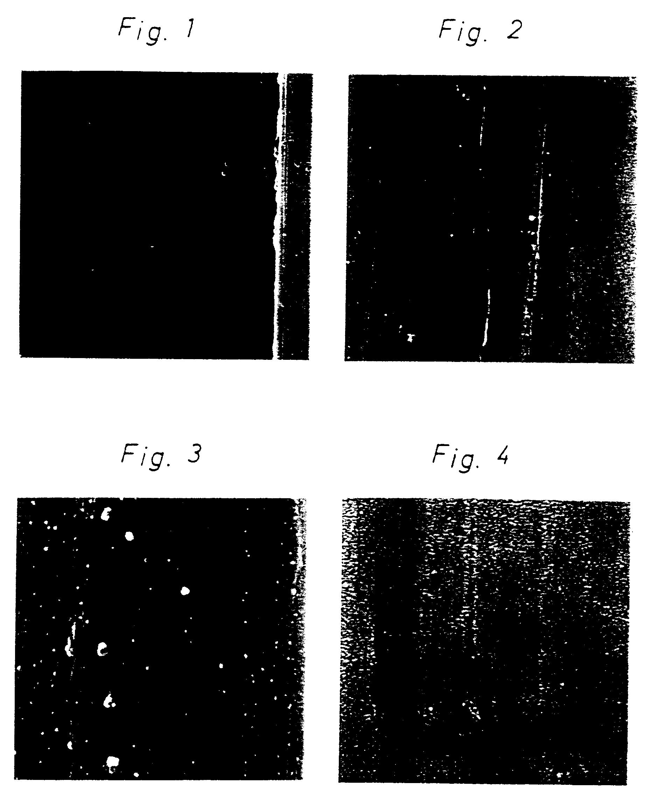

To a mixture comprising 30% by weight of a super-high-molecular-weight polyethylene powder (PE-I) having an intrinsic viscosity $(\eta)$ m of 8.20 dℓ/g and a melting point of 134°C and 70% by weight of a pulverized paraffin wax (WAX-I) having a melting point of 69°C and a molecular weight of 460, a heat stabilizer (3,5-di-t-butyl-4-hydroxytoluene) was added in an amount of 0.10 part by weight per 100 parts by weight of the mixture of PE-I and WAX-I, and the composition was mixed by a Henschel mixer and melt-kneaded at a resin temperature of 190°C by using a screw extruder having a screw diameter of 20 mm and an L/D ratio of 20. Then, the kneaded melt was extruded from a die having an orifice diameter of 2 mm and solidified by air cooling. The extrudate was taken up so that the filament diameter after solidification was 1.6 x $10^{-2}$ mm. Namely, the draft ratio was adjusted to 31.4. Subsequently, drawing was carried out in a drawing tank containing n-decane as the heating medium (the temperature in the tank was 130°C) and another drawing tank containing triethylene glycol as the heating medium (the temperature in the tank was 142°C) at a total draw ratio of 22 by using three godet rolls to obtain a multi-filament yarn. This multi-filament yarn was characterized by an intrinsic viscosity $(\eta)$ p of 7.7 dℓ/g, an intrinsic viscosity reduction ratio of 6.1%, a tensile modulus of 85 GPa, a tensile strength of 2.3 GPa and a fineness of 1000 denier per 100 filaments, and the number of oxygen atoms added to the surface was 2.2 per 100 carbon atoms. As shown in the 3000-magnification electron microscope photograph of Fig. 1, convexities and concavities were not found on the multi-filament yarn, and the surface was smooth.

(Corona Discharge Treatment of Multi-Filament Yarn)

In a corona discharge treatment apparatus supplied by Tomoe Kogyo, bar-shaped electrodes were arranged so that the electrode spacing was 1.0 mm, and the above-mentioned super-high-molecular-weight multi-filament yarn was treated once with an irradiation dose of 75 W/m$^2$/min. After the treatment, the tensile strength of the multi-filament yarn was 2.2 GPa (the retention ratio was 95.7%) and the tensile modulus was 81 GPa (the retention ratio was 95.3%). The number of oxygen atoms added to the surface was 8.7 per 100 carbon atoms. As shown in the 3000-magnification electron microscope photograph of Fig. 2, convexities and concavities were not found on the surface, and the surface was smooth.

(Production of Composite Material)

The corona-discharge-treated multi-filament yarn was impregnated with a resin mixture comprising an epoxy resin (EPOMIK® R-301M80 supplied by Mitsui Petrochemical Industries), another epoxy resin (EPOMIK® R-140 supplied by Mitsui Petrochemical Industries), dicyandiamide, 3-(p-chlorophenyl-1,1-dimethylurea) and dimethylformamide at a weight ratio of 87.5/30/5/5/25, and the impregnated multi-filament yarn was dried at 100°C for 10 minutes to form prepregs. The so-obtained prepregs were laminated and press-molded at 100°C for 1 hour to obtain a unidirectional laminated board. The flexural strength and flexural modulus (JIS K-691) of the laminated board were measured. The obtained results are shown in Table 1.

Comparative Example 1

(Preparation of Super-High-Molecular-Weight Polyethylene Multi-Filament Yarn)

A nitrogen-sealed separable flask was charged with 100 parts by weight of a mixture comprising 5% by weight of a super-high-molecular-weight polyethylene powder (PE-II) having an intrinsic viscosity $(\eta)$ m of 17.0 dℓ/g and a melting point of 134°C and 95% by weight of decalin and 0.1 part by weight of a heat stabilizer (3,5-di-t-butyl-4-hydroxytoluene), and the mixture was stirred under heating at 180°C for 1 hour to form a homogeneous solution. Then, the solution was charged in a spinning cylinder and allowed to stand still at 180°C for 2 hours in a nitrogen atmosphere to effect defoaming. The solution was extruded from a

6

die plate having 100 capillaries having a diameter of 2 mm into a coagulation tank (water tank) located 30 cm below the die plate without drafting at a draft ratio exceeding 2, whereby a gelatinous filament yarn was obtained.

Then, the gelatinous filament yarn was continuously wound at a rate of 1 m/min on a bobbin having a diameter of 15 cm. The bobbin having the gelatinous filament yarn wound thereon was immersed in an n-hexane tank at room temperature to substitute decalin as the liquid component of the gel with n-hexane. The gelatinous yarn was rewound and n-hexane was evaporated at 50 to 60°C. The fineness of the dried yarn was 1300 ± 100 denier. The dried yarn was supplied at a rate of 50 cm/min in nitrogen-sealed heating tubes and subjected to three-staged drawing by using 4 godet rolls. The effective length of each heating tube was 50 cm, and the inner temperatures of the first, second and third heating tubes were 110°C, 130°C and 140°C, respectively. The draw ratio determined from the rotation ratio between the first and fourth godet rolls was 60. The rotation speeds of the second and third godet rolls were appropriately selected so that the operation could be conducted stably. The obtained multi-filament yarn was characterized by an intrinsic viscosity $(\eta)$ p of 14.0 d$\ell$/g, an intrinsic viscosity reduction ratio of 17.6%, a tensile modulus of 80 GPa, a tensile strength of 2.5 GPa and a fineness of 2100 denier per 100 filaments, and the number of oxygen atoms added to the surface was 2.5 per 100 carbon atoms. As shown in the 3000-magnification electron microscope photograph of Fig. 3, convexities and concavities were not found on the surface and the surface was smooth.

(Corona Discharge Treatment of Multi-Filament Yarn)

The above-mentioned multi-filament yarn was subjected to the corona discharge treatment under the same conditions as described in Example 1. After the treatment, the tensile modulus of the multi-filament yarn was 54 GPa (the retention ratio was 67.5%) and the tensile strength was 1.5 GPa (the retention ratio was 60%), and the number of oxygen atoms added to the surface was 7.0 per 100 carbon atoms. As shown in Fig. 4, pittings were observed with a crack width of 0.06 to 0.4 $\mu$m (observed at 3000 magnifications) in the direcion of the fiber axis over the entire surface, and there were present many pittings having a crack width larger than 0.1 $\mu$m.

(Producation of Composite Material)

By using the above-mentioned multi-filament yarn, a laminated board was prepared in the same manner as described in Example 1. The obtained results are shown in Table 1.

Comparative Example 2

The super-high-molecular-weight polyethylene multi-filament yarn prepared in Example 1 was not treated at all but was directly used for the production of a laminated board under the same conditions as described in Example 1. The flexural strength and flexural modulus of the obtained laminated board was measured. The obtained results are shown in Table 1.

Example 2

The super-high-molecular-weight polyethylene multi-filament yarn prepared in Example 1 was treated once with a treatment energy of 0.6 W/m$^2$/min by using the same apparatus as described in Example 1. The tensile strength of the treated multi-filament yarn was 2.2 GPa (the retention ratio was 95.7%) and the tensile modulus was 82 GPa (the retention ratio was 98.8%). The number of oxygen atoms added to the surface was 5.0 per 100 carbon atoms. Convexities and concavities were not found on the surface of the multi-filament yarn and the surface was smooth. By using this multi-filament yarn, a laminated board was prepared under the same conditions as described in Example 1. The obtained results are shown in Table 1.

Example 3

By using a high-frequency plasma treatment apparatus (Model RFG-400 supplied by Samco International Laboratory), the super-high-molecular-weight polyethylene multi-filament yarn prepared in Example 1 was treated at an output of 50 W under a vacuum degree of 1.0 Torr for 10 seconds by using air as the treatment gas. The tensile strength of the treated multi-filament yarn was 2.1 GPa (the retention ratio was 91.3%) and the tensile modulus was 79 GPa (the retention ratio was 92.9%). The number of oxygen atoms added to the surface was 11.5 per 100 carbon atoms. Convexities and concavities were not observed on the surface of the multi-filament yarn, and the surface was smooth. A laminated board was prepared under the same conditions as described in Example 1 by using the above-mentioned multi-filament yarn. The obtained results are shown in Table 1.

## Table 1

| | Flexural Strength $(kg/mm^2)$ | Flexural Modulus $(kg/mm^2)$ |
|---|---|---|
| Example 1 | 23.7 | 2570 |
| Comparative Example 1 | 15.4 | 2500 |
| Comparative Example 2 | 8.7 | 2330 |
| Example 2 | 12.0 | 2440 |
| Example 3 | 22.8 | 2980 |

## Claims

1. A drawn filament yarn which is highly molecularly oriented and has a smooth surface which is substantially free of convexities and concavities having a crack width of 0.1 micron or more in the orientation direction, and which has at least 4 oxygen atoms added to the surface per 100 carbon atoms, as measured according to electron spectroscopy for chemical analysis comprising high-molecular weight polyolefin having an intrinsic viscosity of at least 5 dl/g as measured in decalin as the solvent at 135°C, said drawn filament yarn being obtainable by mixing a high-molecular-weight polyolefin, a waxy material compatible with the high-molecular-weight polyolefin at a weight ratio of from 10/90 to 80/20 and from 0.01 to 5% by weight of a heat stabilizer at a temperature lower than the melting point of the high molecular-weight polyolefin, melt-kneading the mixture at a temperature higher than the melting point at the high-molecular-weight polyolefin but less than 100°C higher than the melting point of the high-molecular-weight polyolefin, extruding the melt from a die in the form of an undrawn yarn, cooling and solidifying the undrawn yarn, drawing the undrawn yarn at a draw ratio of at least 10 at a temperature close to the melting point of high-molecular-weight polyolefin and extracting the waxy material from the yarn during or after drawing, and subjecting the yarn to a corona discharge treatment or a plasma discharge treatment, while controlling the reduction ratio of the intrinsic viscosity to below 14%, and adding at least 4 oxygen atoms to the surface per 100 carbon atoms, as measured according to electron spectroscopy for chemical analysis.

2. A drawn filament yarn according to claim 1, wherein at least 8 oxygen atoms are added to the surface per 100 carbon atoms.

3. A drawn filament yarn according to claim 1 or claim 2 comprising super-high-molecular-weight polyethylene having an intrinsic viscosity (eta) m of 7 to 30 dl/g.

4. A drawn filament yarn according to claim 1, which has a tensile modulus of at least 50 GPa and a tensile strength of at least 1.5 GPa.

5. A reinforcing fibrous material composed of spun and drawn filament according to claim 1, wherein the yarn comprises a super-high-molecular weight polyethylene having an intrinsic viscosity (eta) m of 7 to 30 dl/g as measured in decalin as the solvent at 135°C., the yarn having at least 8 oxygen atoms added to the surface per 100 carbon atoms, as measured according to electron spectroscopy for chemical analysis, and the filament yarn having a tensile modulus of at least 50 GPa and a tensile strength of at least 1.5 GPa.

6. A process for the production of a drawn filament yarn according to any one of claims 1 to 5 which process comprises the steps of mixing a high-molecular-weight polyolefin, a waxy material compatible with the high-molecular-weight polyolefin at a weight ratio of from 10/90 to 80/20 and from 0.01 to 5% by weight of a heat stabiliser at a temperature lower than the melting point of the high molecular-weight polyolefin, melt-kneading the mixture at a temperature higher than the melting point of the high-molecular-weight polyolefin but less than 100°C higher than the melting point of the high-molecular-weight polyolefin, extruding the melt from a die in the form of an undrawn yarn, cooling and solidifying the undrawn yarn, drawing the undrawn yarn at a draw ratio of at least 10 at a temperature close to the melting point of high-molecular-weight polyolefin and extracting the waxy material from the yarn during or after drawing and subjecting the yarn to a corona discharge treatment or a plasma discharge treatment, while controlling the reduction ratio of the intrinsic viscosity to below 14%, and adding at least 4 oxygen atoms to the surface per 100 carbon atoms, as measured according to electron spectroscopy for chemical analysis.

7. A process according to claim 6, wherein the drawn filament yarn is subjected to corona discharge treatment carried out at an electrode spacing of 0.4 to 2.00 m with a treatment energy of 0.4 to 500 $W/m^2/min$.

8. A process according to claim 6 or claim 7, wherein the corona discharge treatment or plasma discharge treatment is carried out so that the polyolefin drawn filament comes to have at least 8 oxygen atoms added to the surface per 100 carbon atoms, as measured according to electron spectroscopy for chemical analysis.

**Patentansprüche**

1. Gestrecktes Filamentgarn, das stark molekular orientiert ist und eine glatte Oberfläche besitzt, die im wesentlichen frei ist von konvexen und konkaven Stellen mit einer Rißweite von 0,1 $\mu$m oder mehr in der Orientierungsrichtung und das mindestens vier zugesetzte Sauerstoffatome an der Oberfläche pro 100 Kohlenstoffatome enthält, gemessen durch Elektronenspektroskopie zur chemischen Analyse, umfassend hochmolekulares Polyolefin mit einer Grenzviskosität von mindestens 5 dl/g, gemessen in Decalin als Lösungsmittel bei 135°C, wobei das gestreckte Filamentgarn erhältlich ist, durch Vermischen eines hochmolekularen Polyolefins, eines mit dem hochmolekularen Polyolefin verträglichen wachsartigen Materials, in einem Gewichtsverhältnis von 10:90 bis 80:20, und von 0,01 bis 5 Gew.-% eines Wärmestabilisators bei einer Temperatur, die niedriger liegt als der Schmelzpunkt des hochmolekularen Polyolefins, Verkneten des Gemisches in der Schmelze bei einer Temperatur, die höher liegt als der Schmelzpunkt des hochmolekularen Polyolefins, aber weniger als 100°C höher als der Schmelzpunkt des hochmolekularen Polyolefins, Extrudieren der Schmelze aus einem Spritzkopf in Form eines nicht gestreckten Garns, Abkühlen und Verfestigen des nicht gestreckten Garns, Strecken des nicht gestreckten Garns in einem Streckverhältnis von mindestens 10 bei einer Temperatur nahe dem Schmelzpunkt des hochmolekularen Polyolefins und Extrahieren des wachsartigen Materials von dem Garn während oder nach dem Strecken und Durchführung einer Korona-Entladungsbehandlung oder einer Plasma-Entladungsbehandlung an dem Garn während das Verhältnis der Verringerung der Grenzviskosität auf unter 14 % kontrolliert wird und Zusatz von mindestens vier Sauerstoffatomen zu der Oberfläche pro 100 Kohlenstoffatome, gemessen durch Elektronenspektroskopie zur chemischen Analyse.

2. Gestrecktes Filamentgarn nach Anspruch 1, wobei mindestens 8 Sauerstoffatome zu der Oberfläche pro 100 Kohlenstoffatome zugesetzt sind.

3. Gestrecktes Filamentgarn nach Anspruch 1 oder Anspruch 2, umfassend superhochmolekulares Polyethylen mit einer Grenzviskosität ($\eta$) m von 7 bis 30 dl/g.

4. Gestrecktes Filamentgarn nach Anspruch 1, mit einem Elastizitätsmodul von mindestens 50 GPa und einer Zugfestigkeit von mindestens 1,5 GPa.

5. Faserförmiges Verstärkungsmaterial bestehend aus gesponnenem und gestrecktem Filament nach Anspruch 1, wobei das Garn ein superhochmolekulares Polyethylen mit einer Grenzviskosität ($\eta$) m von 7 bis 30 dl/g, gemessen in Decalin als Lösungsmittel bei 135°C, umfaßt und das Garn mindestens 8 Sauerstoffatome zugesetzt zu der Oberfläche auf 100 Kohlenstoffatome aufweist, gemessen durch Elektronenspektroskopie zur chemischen Analyse und das Filamentgarn einen Elastizitätsmodul von mindestens 50 GPa und eine Zugfestigkeit von mindestens 1,5 GPa besitzt.

6. Verfahren zur Herstellung eines gestreckten Filamentgarns nach einem der Ansprüche 1 bis 5, wobei das Verfahren umfaßt die Stufen des Vermischens eines hochmolekularen Polyolefins, eines mit dem hochmolekularen Polyolefin verträglichen wachsartigen Materials in einem Gewichtsverhältnis von 10:90 bis 80:20 und von 0,01 bis 5 Gew.-% eines Wärmestabilisators bei einer Temperatur, die niedriger liegt als der Schmelzpunkt des hochmolekularen Polyolefins, Verkneten des Gemisches in der Schmelze bei einer Temperatur, die höher liegt als der Schmelzpunkt des hochmolekularen Polyolefins, aber weniger als 100°C höher als der Schmelzpunkt des hochmolekularen Polyolefins, Extrudieren der Schmelze aus einem Spritzkopf in Form eines nicht gestreckten Garns, Abkühlen und Verfestigen des nicht gestreckten Garns, Strecken des nicht gestreckten Garns in einem Streckverhältnis von mindestens 10 bei einer Temperatur nahe dem Schmelzpunkt des hochmolekularen Polyolefins und Extrahieren des wachsartigen Materials von dem Garn während oder nach dem Strecken und Durchführung einer Korona-Entladungsbehandlung oder einer Plasma-Entladungsbehandlung an dem Garn während das Verhältnis der Verringerung der Grenzviskosität auf unter 14 % kontrolliert wird, und Zusatz von mindestens vier Sauerstoffatomen zur der Oberfläche pro 100 Kohlenstoffatome, gemessen durch Elektronenspektroskopie zur chemischen Analyse.

7. Verfahren nach Anspruch 6, wobei das gestreckte Filamentgarn einer Korona-Entladungsbehandlung unterworfen wird, die mit einem Elektrodenabstand von 0,4 bis 2,00 m mit einer Behandlungsenergie von 0,4 bis 500 W/m$^2$ x min durchgeführt wird.

8. Verfahren nach Anspruch 6 oder 7, wobei die Korona-Entladungsbehandlung oder Plasma-Entladungsbehandlung so durchgeführt wird, daß das gestreckte Polyolefinfilament mindestens 8 zu der Oberfläche zugesetzte Sauerstoffatome pro 100 Kohlenstoffatome erhält, gemessen durch Elektronenspektroskopie zur chemischen Analyse.

**Revendications**

1. Fil étiré composé de filaments présentant une orientation moléculaire élevée et une surface lisse qui est pratiquement exempte de régions convexes et concaves ayant une largeur de crevasses, dans le sens de l'orientation, supérieure ou égale à 0,1 micron, et à la surface duquel on a ajouté au moins 4 atomes d'oxygène pour 100 atomes de carbone, valeur mesurée par spectroscopie électronique destinée à l'analyse chimique, constitué de polyoléfine de masse moléculaire élevée ayant une viscosité intrinsèque au moins égale à 5 dl/g, mesurée en utilisant comme solvant la décaline à 135 °C, ledit fil étiré constitué de filaments pouvant être obtenu par

mélangeage d'une polyoléfine de masse moléculaire élevée et d'une matière cireuse compatible avec la polyoléfine de masse moléculaire élevée en un rapport en poids compris entre 10/90 et 80/20 et de 0,01 à 5 % en poids d'un agent thermostabilisant, à une température inférieure au point de fusion de la polyoléfine de masse moléculaire élevée,

malaxage du mélange à l'état fondu à une température supérieure au point de fusion de la polyoléfine de masse moléculaire élevée mais moins de 100 °C supérieure au point de fusion de la polyoléfine de masse moléculaire élevée,

extrusion, à travers une filière, de la masse fondue sous forme d'un fil non étiré,

refroidissement et solidification du fil non étiré,

étirage du fil non étiré avec un taux d'étirage au moins égal à 10 à une température proche du point de fusion de la polyoléfine de masse moléculaire élevée et extraction de la matière cireuse à partir du fil pendant ou après l'étirage, et

exposition du fil étiré à un traitement par décharge à effet corona ou par décharge au plasma tout en limitant le taux de réduction de la viscosité intrinsèque à une valeur inférieure à 14 %, et en ajoutant à sa surface au moins 4 atomes d'oxygène pour 100 atomes de carbone, valeur mesurée par spectroscopie électronique destinée à l'analyse chimique.

2. Fil étiré composé de filaments conforme à la revendication 1, à la surface duquel on ajoute au moins 8 atomes d'oxygène pour 100 atomes de carbone.

3. Fil étiré composé de filaments conforme à la revendication 1 ou 2, constitué de polyéthylène de masse moléculaire très élevée ayant une viscosité intrinsèque $[\eta]_m$ comprise entre 7 et 30 dl/g.

4. Fil étiré composé de filaments conforme à la revendication 1, présentant un module de traction au moins égal à 50 GPa et une résistance à la rupture en traction au moins égal à 1,5 GPa.

5. Matériau fibreux de renforcement composé de filaments étirés et filés conforme à la revendication 1, dans lequel le fil est constitué de polyéthylène de masse moléculaire très élevée ayant une viscosité intrinsèque $[\eta]_m$ comprise entre 7 et 30 dl/g, mesurée en utilisant comme solvant la décaline à 135 °C, le fil comportant à sa surface au moins 8 atomes d'oxygène pour 100 atomes de carbone, valeur mesurée par spectroscopie électronique destinée à l'analyse chimique, et le fil constitué de filaments ayant un module de traction au moins égal à 50 GPa et une résistance à la rupture en traction au moins égale à 1,5 GPa.

6. Procédé de fabrication d'un fil composé de filaments étirés conforme à une quelconque des revendications 1 à 5, lequel procédé comporte les étapes consistant
à mélanger une polyoléfine de masse moléculaire élevée, une matière cireuse compatible avec la polyoléfine de masse moléculaire élevée en un rapport en poids compris entre 10/90 et 80/20 et de 0,01 à 5 % en poids d'un agent thermostabilisant à une température inférieure au point de fusion de la polyoléfine de masse moléculaire élevée,
à malaxer le mélange à l'état fondu à une température supérieure au point de fusion de la polyoléfine de masse moléculaire élevée mais moins de 100 °C supérieure au point de fusion de la polyoléfine de masse moléculaire élevée,
à extruder, à travers une filière, la masse fondue sous forme d'un fil non étiré,
à refroidir et solidifier le fil non étiré,
à étirer le fil non étiré avec un taux d'étirage au moins égal à 10, à une température proche du point de fusion de la polyoléfine de masse moléculaire élevée et à extraire, pendant ou après l'étirage, la matière cireuse du fil, et
à exposer le fil étiré à un traitement par décharge à effet corona ou par décharge au plasma tout en limitant le taux de réduction de la viscosité intrinsèque à une valeur inférieure à 14 %, et en ajoutant à la surface au moins 4 atomes d'oxygène pour 100 atomes de carbone, valeur mesurée par spectroscopie électronique destinée à l'analyse chimique.

7. Procédé conforme à la revendication 6, dans lequel le fil étiré composé de filaments est exposé à un traitement par décharge à effet corona effectué avec un espacement d'électrode compris entre 0,4 et 2,00 mm et une énergie de traitement comprise entre 0,4 et 500 W/m²/min.

8. Procédé conforme à la revendication 6 ou 7, dans lequel le traitement par décharge à effet corona ou le traitement par décharge au plasma est effectué de manière à fixer, à la surface du filament étiré en polyoléfine, au moins 8 atomes d'oxygène pour 100 atomes de carbone, valeur mesurée par spectroscopie électronique destinée à l'analyse chimique.

Fig. 1

Fig. 2

Fig. 3

Fig. 4